# EUROPEAN PATENT SPECIFICATION

(11) **EP 2 305 927 B1**
(45) Date of publication and mention of the grant of the patent: **18.07.2018**
(21) Application number: 09746507.4
(22) Date of filing: 22.04.2009
(51) Int. Cl.: B60R 25/04, B60R 25/24, G06F 21/34

(54) **ELECTRONIC KEY SYSTEM**
ELEKTRONISCHES SCHLÜSSELSYSTEM
SYSTÈME DE CLÉ ÉLECTRONIQUE

(30) Priority: 22.04.2008 JP 2008110883
(43) Date of publication of application: 06.04.2011
(73) Proprietor: NTI, Inc., Yokkaichi-shi Mie 510-8021 (JP)
(72) Inventor: NAKAMURA, Takatoshi, Yokkaichi-shi Mie 512-8044 (JP)
(74) Representative: Brookes IP
(86) International application number: PCT/JP2009/058428
(87) International publication number: WO 2009/139300

(56) References cited:
- GB-A- 2 285 702
- JP-A- 5 071 258
- JP-A- 2001 117 823
- JP-A- 2005 126 054
- US-A1- 2007 198 857

## Description

### Technical Field

The present invention relates to an electronic key system that includes an electronic key and a program execution device for decoding a program at least part of which is encrypted with information in the electronic key and performing the decoded program.

### Background Art

Electronic keys which are highly safe and operable have recently come into use as ignition keys for automobiles. When an electronic key ie used, information in the electronic key is transmitted to a receiver mounted on a vehicle. Then authentication is made for validity of the key by comparing the information received at the receiver with information previously stored in the receiver.

If a malicious user finds a way to circumvent the authentication process for the electronic key, however, the malicious user can steal the vehicle by driving it away.

That is true not only for an ignition key of an automobile but also for general vehicles and automatic doors at entrances of condominiums ,e.g.; therefore, it is apprehended that the vehicles are wrongfully driven and the automatic doors are wrongfully operated by circumventing the authentication process.

GB2285702 discloses a method of operating a vehicle with a management system induding a processor for controlling the vehicle. The vehicle comprises holding a program in encoded form in a first store, and on starting the vehicle decoding the program in accordance with a PIN entered, and reading it to processor memory. Further programs held in the first store validate the decoded program, and energise alarms if attempts are made to start the vehicle without a PIN, if the decoded program is invalid or in response to outputs from alarm condition sensors.

US2007198857 discloses encrypting at least part of a computer program element for enabling protecting execution of said computer program element. The method comprising the steps of extracting at least one static resource of said computer program element and encrypting said static resource with a first key, and decrypting of said encrypted static resource, comprising obtaining said static resource encrypted with a first key, in a first entity, providing said encrypted static resource to a second entity, obtaining said static resource encrypted with a first key, obtaining a second key, decrypting said encrypted static resource, using said second key, providing said static resource to the first entity, and obtaining by said first entity said static resource from the second entity.

Here, an object of the present invention is to improve safety of the use of the electronic key system by preventing circumvention of authentication for the purpose of malicious operation of vehicles and other devices.

### Summary of Invention

As a result of the present inventor's studies to solve the problem, the inventor acquired knowledge below.

Recent models of automobile employ computers for operations including control of the engine, for example. The computer controls the engine by executing some kind of program. If the computer is adapted to simply make an authentication with data transmitted from the key as mentioned above, the authentication process is omitted by unauthorized means and the computer can execute the above-mentioned program. If it is adapted not to execute the above-mentioned program until the above-mentioned authentication succeeds, the authentication cannot be omitted, and thus, the computer cannot be manipulated to execute the program.

Based on the knowledge, the inventor proposes the electronic key system as defined in independent claim 1 and the corresponding information processing method as defined in independent claim 7. In this electronic key system, the program execution device is adapted to activate the program only when the program is decoded with the decoding information (this may be unique for each electronic key in many cases) recorded in the electronic key. Unless a valid electronic key is used, the program cannot be executed by the program execution device. Consequently, that means only the electronic key with information that can decode the program is determined as the valid electronic key.

As an example of using the electronic key as an ignition key of an automobile, a case where a computer starts up the engine of the automobile according to the information recorded in the electronic key is considered. In this case, the program needed to start up the engine is not decoded yet, and unless the program is decoded with information recorded in the valid electronic key, the engine cannot be started up. That is, the present invention prevents omission of the authentication process by integrating the authentication process and the decoding process of the program. Accordingly, the present invention can lower the risk of unauthorized execution of the program, and thus, improve the safety in use of the electronic key.

The inventor also proposes the electronic key system as defined in independent claim 2 and the corresponding information processing method as defined in independent claim 8. This aspect of the present invention is adapted to use the electronic key to decode the encrypted part of the program at least part of which is encrypted. That is, the encrypted program may be decoded in the program execution device as in the above-mentioned aspect, but also may be decoded in the electronic key as in this aspect. In this electronic key system, as in the above-mentioned electronic key system that decodes the program in the program execution device, the program cannot be executed if the whole of the authentication that includes the program decoding integrated therewith is omitted.

The program execution device according to the present invention is adapted to control a predetermined driving device that performs a physical action when the program executing means executes the program.

The program execution device according to the present invention is mounted on a vehicle and the driving device is a power unit of the vehicle.

The inventor also proposes the vehicle equipped with a program execution device of the electronic key system of the present invention.

With the combination of that kind of program execution device and the electronic key, control of the power unit of tne vehicle is disabled until the program is decoded. Specifically, in the case of an automobile, the engine is disabled to be started up; therefore, the risk of starting up the engine by circumventing the authentication can be lowered. That means the automobile cannot be stolen by means of circumvention of authentication.

The program execution device of the electronic key system of the present invention may also include: recording means for recording the decoded part of the program in a state in which the program executing means can execute the program when the encrypted part of the program is decoded; and a deleting means for deleting the decoded part of the program recorded in the recording means when it is determined whether a predetermined condition is satisfied or not and determined that the predetermined condition is satisfied.

Since the program execution device is adapted to delete the decoded part of the program when the predetermined condition is satisfied, even if the program execution device can once execute the program, it is not permanently left in that situation.

The predetermined condition can be determined as required. For example, as the program execution device is adapted to control a predetermined driving device that performs a physical action when the program executing means executes the program, the predetermined condition may be that the predetermined driving device that performed a physical action stops when the program executing means executes the program. Specifically, when the electronic key system of the present application is applied to a self-locking automatic door that is opened and closed by a motor, which ie its driving device, the system is adapted to delete from the recording means the decoded part of the program when the motor stops after it has opened and then closed the door. When the program execution device is mounted on a vehicle and the driving device is used as a power unit of the vehicle, the system is adapted to delete from the recording means the decoded part of the program when the engine, which is its power unit, stops. In that case, since the encrypted part of the program is required to be decoded each time when the engine is started up by the electronic key, the system can almost completely prevent stealing of the vehicle when it is stopped with its engine cut.

The electronic key system of the present invention is one that uses component information.

That is, the electronic key system is such that its program execution device controls a predetermined driving device that performs a physical action by the program executing means executing the program, the program execution device is mounted on a vehicle and the driving device is a power unit of the vehicle, component information needed for decoding the encrypted part of the program is added to part of a component constituting the vehicle, the decoding means has receiving means for receiving input of the component information in decoding the encrypted part of the program, and the decoding means decodes the encrypted part of the program by using both the decoding information and the component information.

Although the components of a vehicle play respective roles, the manufacturer of the vehicle does not want the user or the like to freely exchange some of the components in particular, for a reason that these components are functionally important, that they are essential to secure safety or the like. Or, some of the components are frequently stolen because they are expensive.

The above-mentioned component information is only needed to be fixedly given to these particular components (at least in a way that they are not easily removed or changed.) In the above-mentioned electronic key system, not only the decoding information but also the component information is needed for decoding the encrypted part of the program. Therefore, if the vehicle component that has the component information given is lost for such a reason that it is exchanged or stolen, the encrypted part of the program cannot be decoded, which means that the vehicle cannot be used in fact; in that manner, the system readily prevents the component with component information from being easily exchanged and also readily prevents the occurrence of accident caused by the vehicle with an important component lost.

The receiving means is principally provided for the program execution device when the decoding means is on the program execution device and for the electronic key when the decoding means is on the electronic key.

The component information may be recorded in any form (for example, it may be in the form of text, graphics, bar code, electromagnetic data or the like, or a combination of them.), and may be given to the component in any manner (for example, it may be provided for the component by printing, engraving, casting, pasting, welding, screwed or the like.).

When the component information is drawn on part of the component constituting the vehicle as information that can be recognized by image recognition, the electronic key system using the component information may include: image pick-up means for picking up an image of the component information when the decoding means decodes the encrypted part of tne program; image processing means for generating the component information by image recognition from the image picked up by the image pick-up means; and input means fcr inputting data of the component information generated by the image processing means to the receiving means. In that case, the image pick-up means may be attached to the vehicle or to the electronic key as it can pick up the component information. The image pick-up means may be attached to an appliance like a digital camera, a cellular phone or the like other than the vehicle and the electronic key. In any case, the image data generated by having the image pick-up means pick up the image is transmitted to the image processing means. The image processing means and the input means may be provided for either the program execution device or the electronic key, and when the image pick-up means is provided for an appliance other than the vehicle and the electronic key, they may be provided for that appliance. When the receiving means, the image pick-up means, the image processing means and the input means are provided for the vehicle, the electronic key and a plurality of the appliances described above or others, means for realizing communication may be needed among these means.

When the component information is data recorded in a recording medium that is provided on part of the component constituting the vehicle, the electronic key system using the component information may include: reading out means for the decoding means to read out data of the component information front the recording medium in decoding the encrypted part of the program; and input means for inputting data of the component information read out by the reading out means to the receiving means.

In that case, the reading out means is attached to the vehicle, and the input means is attached to either the vehicle or the electronic key.

In any case, unless the receiving means, the reading out means and the input means are provided for either the vehicle or the electronic key all together, it is obvious that means for realizing communication among the vehicle and the electronic key may be needed.

The program execution device may include: break command receiving means for receiving break command data transmitted by radio communication from a predetermined command device, wherein the predetermined command device is for outputting the break command data and the break command data is data about a break command for breaking the program; and breaking means for making an irreversible change at least on part of the program when the break command receiving means receives the break command data.

As described above, the electronic key system of the present application highly accurately prevents the program execution device from executing the program in an unauthorized way. It is a matter of course, however, if the electronic key is stolen, the electronic key may be used to make the program execution device, which is paired with the electronic key, execute the program.

According to the present invention, however, since the breaking means in the program execution device that received the break command data makes an irreversible change on part of the program, the program execution device can never execute the program again unless a recovery measure is taken (generally, only an authorized person can perform this measure.). In that manner, the electronic key system can prevent an unauthorized execution of the program performed by the program execution device even after the electronic key is stolen.

The break command data is transmitted by radio communication because it is expected that the command device for transmitting the break command data is not placed near the program execution device in most cases. For example, in the case of the program execution device mounted on an automobile, it is considered that the command device for transmitting the break command data is usually located in the manufacturer, seller or the like of the automobile; therefore, it is considered convenient to use radio communication in transmitting the break command data from that distant place. Particularly in the case where the program execution device is mounted on a moving object like a vehicle, it is more advantageous to adapt the system to make the break command data transmitted by radio communication. The "radio communication" in this case may be communication using appropriate means like a cellular phone network, a satellite communication network or the like without regard of the specific means in particular.

The program execution device of the present invention may also be adapted to receive the break command data directly from the command device, but may be adapted to receive the break command data indirectly from another appliance that received the data via radio communication. For example, if the program execution device is a vehicle, the vehicle is equipped with a radio communication device like a radio telephone, a satellite navigation system or the like in many cases. In those cases, the program execution device may be adapted to receive the break command data from the above-mentioned radio communication device that received the break command data from the command device.

The irreversible change that the breaking means makes on the program may be made by deleting part of the program (whether the part is encrypted or not) or overwriting part of the program with data irrelevant to the program, for example, data consisting of zeros or ones.

The breaking means may be adapted to determine whether a predetermined condition is satisfied or net when the break command receiving means receives the break command data, and to make the irreversible change at least on part of the program when the predetermined condition is satisfied.

For example, if the above-mentioned irrelevant change is made on the program while the vehicle having the program execution device mounted thereon is running, it cannot be denied that the change may cause an accident to the vehicle. In other cases, it is expected that there may be many moments when the irrelevant change should not be made on the program. By making the breaking means determine whether the above-mentioned predetermined condition is satisfied or not, the system can prevent such eventualities as an accident of the vehicle.

### Brief Description of Drawings

Fig. 1 is a diagram showing an entire configuration of an electronic key system of a first embodiment.
Fig. 2 is a diagram showing a hardware configuration in the electronic key system shown in Fig. 1.
Fig. 3 is a flow chart showing a flow of processes executed in the electronic key system shown in Fig. 1.
Fig. 4 is a diagram showing a hardware configuration in the electronic key system of a second embodiment.
Fig. 5 is a flow chart showing a flow of processes executed in the electronic key system of the second embodiment.
Fig. 6 is a diagram showing a hardware configuration in the electronic key system of modification 1 according to the invention.
Fig. 7 is a diagram showing a hardware configuration in the electronic key system of modification 2 according to the invention.
Fig. 8 is a diagram showing a hardware configuration in the electronic key system of a non-claimed modification 3.
Fig. 9 is a diagram showing a hardware configuration in the electronic key system of modification 5 according to the invention.
Fig. 10 is a diagram showing a hardware configuration in the electronic key system of modification 6 according to the invention.

### Description of Embodiments

Hereunder, a first embodiment and a second embodiment of the present invention will be described with reference to the drawings.

The descriptions of the embodiments and modifications will use common symbols as to common portions and omit overlapping descriptions in some cases.

### <<First Embodiment>>

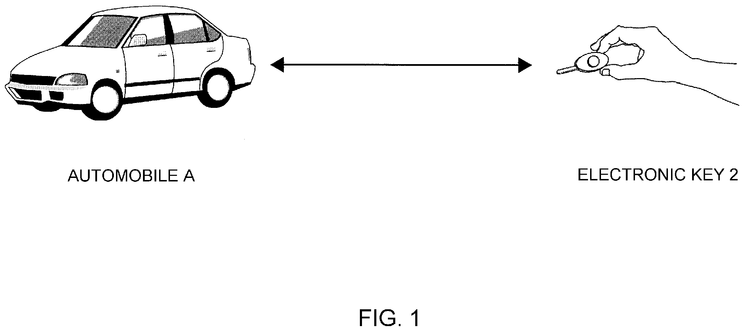

In this embodiment, the electronic key system as shown in Fig. 1 that includes a pair of an automobile A and an electronic key 2 will be described as an example of the present invention. Although there are many pairs of the automobile A and the electronic key 2, one of the pairs will be described as an example in this embodiment.

The automobile A has a program execution device 1 and an engine 3. In this embodiment, the automobile A is adapted to start up the engine 3 via the program execution device 1 in response to an operation on the electronic key 2. The electronic key 2 is paired with the program execution device 1 that is mounted on the automobile A, the counterpart of the electronic key 2.

Although the electronic key 2 in the embodiment is described in a shape of classical key as shown in Fig. 1, it may be in a shape of a card or any other suitable shapes if only it has a hardware configuration to be described later.

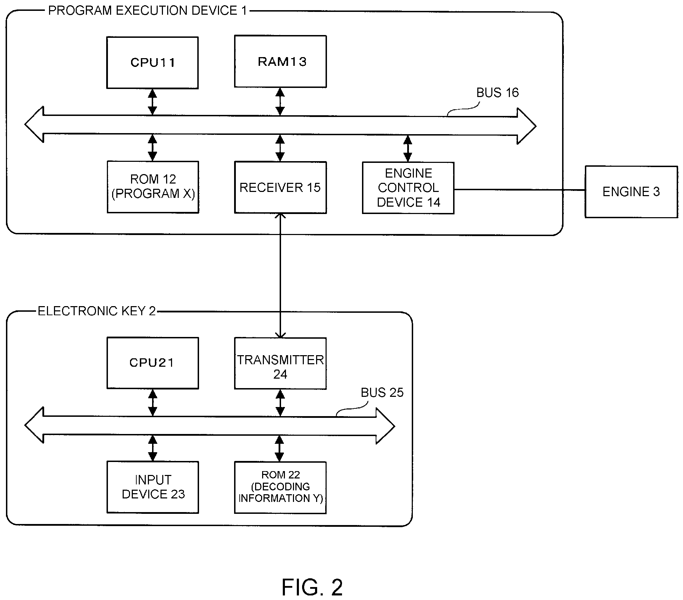

The hardware configurations of the program execution device 1 and the electronic key 2 are shown in Fig. 2.

First, the hardware configuration of the program execution device 1 will be described.

Tn this embodiment, the program execution device 1 includes a CPU (central processing unit) 11, a ROM (read only memory) 12, a RAM (random access memory) 13, an engine control device 14, a receiver 15 and a bus 16. The CPU 11, the ROM 12, the RAM 13, the engine control (control including drive) device 14 and the receiver 15 can exchange data via the bus 16.

The ROM 12 records a predetermined program and predetermined data. A program X recorded in the ROM 12 is encrypted by an appropriate manner using a predetermined algorithm and a predetermined key. Although the program X is only needed to be at least partly encrypted, it is entirely encrypted in this embodiment. The way of encryption of the program is not particularly limited. If the program X has a part necessary to decoding of the program X, it is a matter of course that the part is not encrypted. For example, if the program X has a part necessary to realize communication between the program execution device 1 and the electronic key 2 to be described later, it is a matter of course that the part is not encrypted.

In this embodiment, at least part of the program X (this may or may not be the same as the encrypted part of the program) is unique for each program execution device 1. This is for preventing the unauthorized case in which the ROM 12 recording the program X for another program execution device 1 is took out from another program execution device 1 and replaced with the initially loaded ROM 12 so that the key 2, which was paired with the program execution device 1 that contained the ROM 12 that stores the replacing program X, is used to use the automobile A.

The CPU 11 controls the whole of the program execution 1 and executes processes to be described later based on the program and data stored in the ROM 12. The RAM 13 is used as a working storage for the CPU 11 to perform processes.

The engine control device 14 controls the engine 3 in response to reception of signals including an engine drive enabling signal to be described later from the CPU 11.

When the program X is encrypted, it is a matter of course that the CPU 11 cannot execute the program X. The CPU 11 can control the whole of the automobile A by executing the program X that is not encrypted, and at least can cause the engine control device 14 to control the engine by executing the program X. For example, the CPU 11 executing the program X can command the engine control device 14 to start up the engine 3 of the automobile A by transmitting a drive enabling signal for the engine control device 14 to start up the engine 3.

The receiver 15 is for communicating with the electronic key 2 via radio wave. Although a radio wave is used in this embodiment, the communication between the electronic key 2 and the receiver 15 may be made in any other manners if only they can transmit data stored in the electronic key 2 to the program execution device 1. The receiver 15 may be a device that can communicate by using any other radio techniques including the infrared or by establishing a wired connection or direct connection between the electronic key 2 and the program execution device 1 by a USB connection.

Next, the hardware configuration of the electronic key 2 will be described.

As shown in Fig. 2, the electronic key 2 includes a CPU 21, a ROM 22, an input device 23, a transmitter 24 and a bus 25. The CPU 21, the ROM 22, the input device 23 and the transmitter 24 can exchange data via the bus 25.

The ROM 22 records predetermined data. The data contains decoding information Y, the data needed for decoding the encrypted program X recorded in the program execution device 1.

The decoding information Y is not particularly limited if only it is data needed for decoding the encrypted program X, for example, and may be any data including data of a key, data of part of a key, some kind of data needed for generating a key, data of an algorithm, data of part of an algorithm, and some kind of data needed for generating an algorithm. Each electronic key 2 has decoding information Y unique to itself so that one electronic key 2 can decode only the program X of the program execution device 1 that is paired with the electronic key 2. Here, the decoding information Y needs not to be fixedly recorded in the ROM 22. If the information needed for decoding the program X changes according to a predetermined condition (for example, timing to decode the program X or the number of times the program X is decoded) like the one-time password that has recently become popular, for example, the decoding information Y is generated in the electronic key 2 each time when the program X is decoded. Tn that case, for example, a cache memory or the like that has once recorded the generated information functions as electronic key side recording means in the present invention.

The CPU 21 controls the whole of the electronic key 2 and executes processes to be described later based on the data stored in the ROM 22.

The input device 23 is a push-button switch in this embodiment without limitation. In response to an operation on the input device 23, the information on the operation is transmitted to the CPU 21 via the bus 25.

The transmitter 24 is for communicating with the program execution device 1 via radio waves. Similar to the receiver 15 in the program execution device 1, the transmitter 24 may be a device using another technique if only it can communicate the data stored in the electronic key 2. As mentioned above, in response to an operation on the input device 23, the information on the operation is transmitted to the CPU 21 via the bus 25. When the CPU 21 receives that, it reads out the decoding information Y recorded in the ROM 22 and transmits it to the receiver 15 in the program execution device 1 via the transmitter 24.

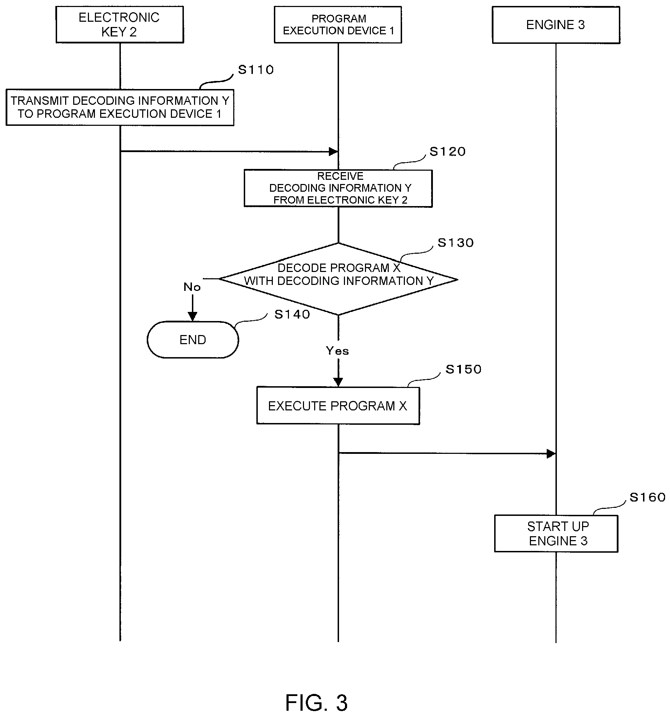

Next, a flow of processes executed in the electronic key system will be described with reference to Fig. 3.

The processes are executed in the electronic key system according to a flow shown below.

First, when the switch on the input device 23 of the electronic xey 2 is pushed, the electronic key 2 transmits the decoding information Y stored in the ROM 22 to the program execution device 1 (S110). Here, the decoding information Y is read out from the ROM 22 and sent to the transmitter 24 via the bus 25 by the CPU 21. The transmitter 24 transmits it to the receiver 15. The decoding information Y transmitted from the transmitter 24 is received by the receiver 15. The received decoding information Y is transmitted from the receiver 15 to the RAM 13 via the bus 16 by the CPU 11 (S120).

Next, the CPU 11 reads out the encrypted program X from the ROM 12 and the decoding information Y from the RAM 13, respectively.

The CPU 11 decodes the encrypted program X based on the decoding information Y (S130). As mentioned above, the decoding information Y is the data of a key used for decoding the program X. The CPU 11 decodes the program X with the key, the decoding information Y. In the embodiment, if the CPU 11 cannot decode the program X (S130:No), the program execution device 1 stops the process instead of executing any process (S140). In fact, if the CPU 11 cannot decode the program X, it may execute another process like alerting tc tell that the decoding information Y is invalid.

When the program X is decoded (S130:Yes), the decoded program X is recorded in the RAM 13 of the program execution device 1. The CPU 11 reads out the decoded program X from the PAM 13 and executes it, and transmits the engine drive enabling signal to the engine control device 14 (S150). When the engine control device 14 receives the engine drive enabling signal, it starts up the engine (S160). Thereafter, the CPU 11 transmits various commands to control the engine to the engine control device 14 of the automobile A by executing the program X.

In that state, the user can drive the automobile A.

In order to stop the engine of the automobile A, the user performs a necessary operation for that purpose on a predetermined appliance of the automobile A. Based on that information, the CPU 11 transmits a command to stop the engine to the engine control device 14 to cause it to stop the engine. After a predetermined period (for example, 5 seconds) passed, the CPU 11 deletes the data of the program X recorded in the RAM 13.

Accordingly, the program X will never be executed by the CPU 11 unless it is decoded again.

In this embodiment, the CPU 11 is adapted to delete the data of the program X recorded in the RAM 13 when a predetermined period passed after the CPU 11 transmitted a command to stop the engine to the engine control device 14. For example, a sensor for detecting the stop of the engine may be provided for an appropriate part of the automobile A so that the CPU 11 deletes the program X recorded in the RAM 13 in response to a reception of an input indicating the stop of the engine from the sensor. The CPU 11 may also be adapted to delete the data of the program X recorded in the RAM 13 not only when the engine stops but also when another predetermined condition is satisfied.

Although the program X is for starting up the engine of an automobile in the first embodiment, it may be for starting up the engine of a vehicle other than an automobile. It will be readily understood by those skilled in the art that the program execution device 1 may be combined with another vehicle having a power unit like a motorcycle, a ship, an airplane and a train. In that case, the engine of the automobile A is replaced by the power unit of the vehicle like an engine, a motor or the like.

### <Modification 1>

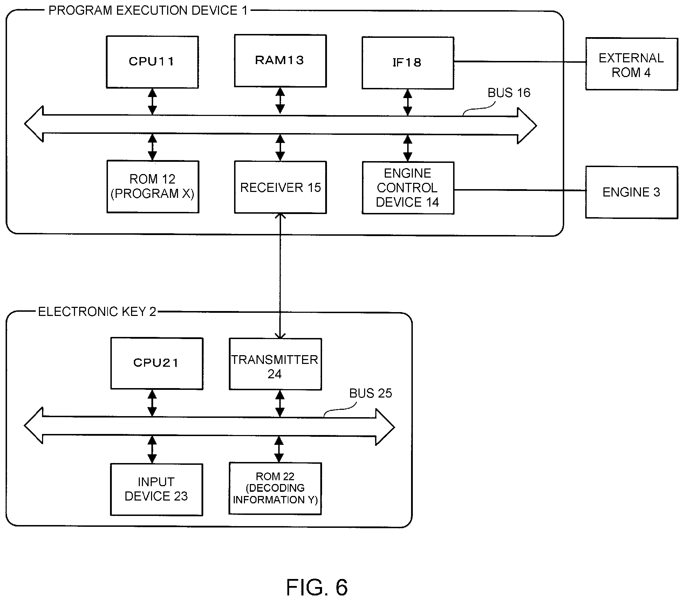

The electronic key system of a modification 1 is shown in Fig. 6.

As shown in Fig. 6, the electronic key system of the modification 1 has the same configuration as that of the electronic key system of the first embodiment.

The electronic key system of the modification 1 is different from the electronic key system of the first embodiment in that the program execution device 1 of the electronic key system of the modification 1 has an interface 18 as shown in Fig. 6.

The interface 18 is connected with the bus 16. The interface 18 may be wireless, but in this embodiment, it is connected with an external ROM 4 via a cable. The external ROM 4 is fixed to a predetermined one of the components constituting the automobile A. The component to which the external ROM 4 is fixed is appropriately determined from the components constituting the automobile A by taking account of the importance of functionality, Importance in terms of safety, and the price, though not limited to them. The external ROM 4 may be attached to each of the components. In this embodiment, the engine of the automobile A is insulated to block the heat from the engine, and then the external ROM 4 is fixed thereto. Although the external ROM 4 may be fixed to the component constituting the automobile A in any manner, it may preferably be fixed to the component so that it cannot be easily removed. The external ROM 4 records the component information. The component information is specific to the external POM 4 recording it (i.e., information specific to the component to which the external ROM 4 is fixed) and is necessary to decode the program X.

A flow of processes executed in the electronic key system of the modification 1 is principally the same as that executed in the electronic key system of the first embodiment.

The flow of processes executed in the electronic key system cf the modification 1 is different from that executed in the electronic key system of the first embodiment in that the decoding information Y is needed to decode the program X in the first embodiment while not only the decoding information Y but also the component information is needed to decode the program X in the modification 1.

In the first embodiment, when the switch on the input device 23 of the electronic key 2 is pushed, the electronic key 2 transmits the decoding information Y to the program execution device 1, and the transmitted decoding information Y is recorded in the RAM 13. In the modification 1, when the switch on the input device 23 of the electronic key 2 is pushed, the CPU 11 instructs the interface 19 to obtain the component information recorded in the external ROM 4, and the interface 18 obtains the component information from the external ROM 4. The component information is recorded in the RAM 13 under the control of the CPU 11.

Next, the CPU 11 reads out the decoding information Y and the component information from the RAM 13, and decodes the program X with the information. In the modification 1, the CPU 11 can generate a key necessary to decode the program X by using the decoding information Y and the component information, and the CPU 11 cannot generate the key without either the decoding information Y or the component information. For example, the CPU 11 generates the key by performing a predetermined operation on the decoding information Y and the component information like finding out the sum or product of the decoding information Y and the component information. The CPU 11 decodes the program X by using the key.

The other processes are the same as those of the first embodiment.

### <Modification 2>

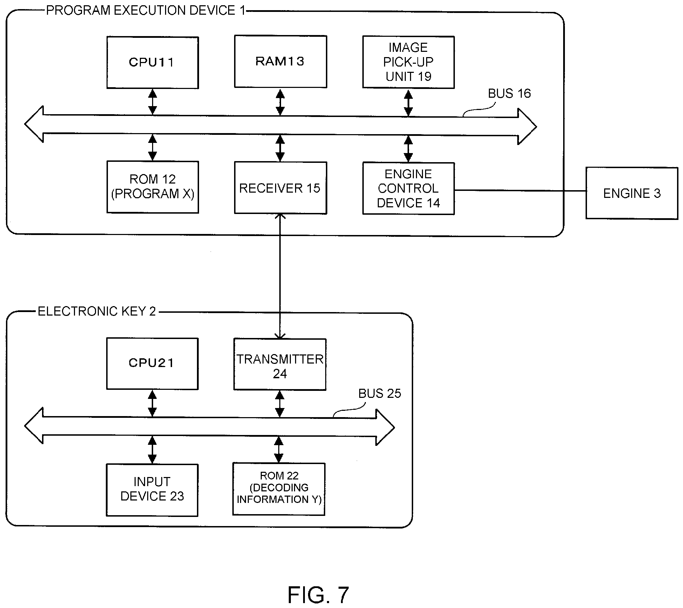

The electronic key system of a modification 2 is shown in Fig. 7.

As shown in Fig. 7, the electronic key system of the modification 2 has the same configuration as that of the electronic key system of the first embodiment.

The electronic key system of the modification 2 is different from the electronic key system of the first embodiment in that the program execution device 1 of the electronic key system of the modification 2 has an image pick-up unit 19 as shown in Fig. 7.

The image pick-up unit 19 can scan the information by image recognition, i.e., scan the component information. The image pick-up unit 19 is connected with the bus 16. In the modification 2, the image pick-up unit 19 is a bar code reader and the component information is a bar code. The bar code is printed on a predetermined one of the components constituting the automobile A in an unerasable manner. Similar to the case where the external ROM 4 is attached to the components, the bar code may be printed on a plurality of appropriate components.

The image pick-up unit 19 is attached to the automobile A so that it can pick up an image of the component information. The image pick-up unit 19 can not only pick up an image of the bar code but also scan the component information contained in the bar code by image recognition. The component information is necessary to decode the program X.

A flow of processes executed in the electronic key system of the modification 2 is principally the same as that executed in the electronic key system of the first embodiment.

The flow of processes executed in the electronic key system of the modification 2 is different from that executed in the electronic key system of the first embodiment in that the decoding information Y is needed to decode the program X in the first embodiment while not only the decoding information Y but also the component information is needed to decode the program X in the modification 2 similar to the modification 1.

In the first embodiment, when the switch on the input device 23 of the electronic key 2 is pushed, the electronic key 2 transmits the decoding information Y to the program execution device 1, and the transmitted decoding information Y is recorded in the RAM 13. In the modification 2, when the switch on the input device 23 of the electronic key 2 is pushed, the CPU 11 instructs the image pick-up unit 19 to pick up an image of the component information, the bar code, and the image pick-up unit 19 picks up the image of the component information. After picking up the image of the bar code, the image pick-up unit 19 records the data of the component information, which the data scanned by performing image recognition on the bar code, into the RAM 13 via the bus 16 under the control of the CPU 11.

Next, the CPU 11 reads out the decoding information Y and the component information from the RAM 13, and decodes the program X with the information. The decoding of the program X in the modification 2 is the same as that of the modification

The other processes are the same as those of the first embodiment.

### <Non-claimed modification 3>

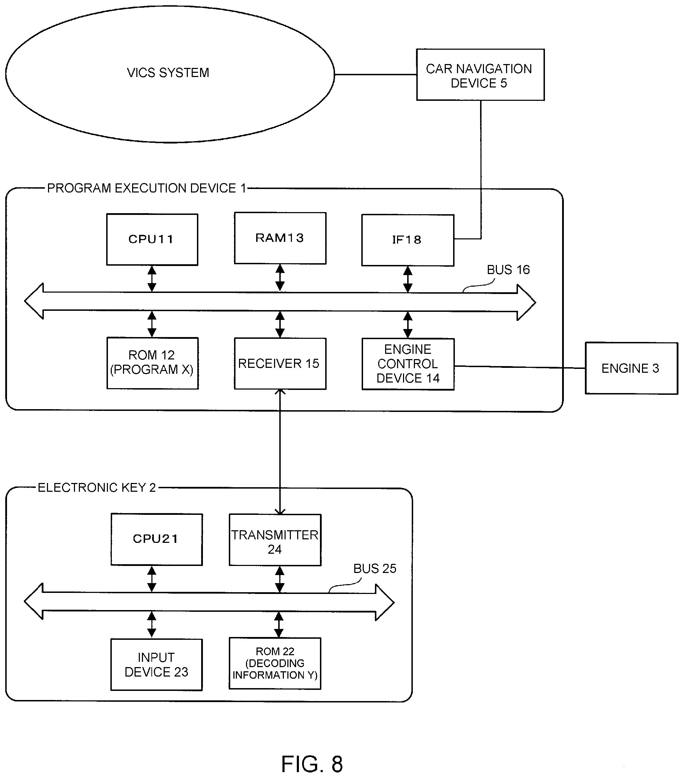

The electronic key system of a modification 3 is shown in Fig. 8.

The electronic key system of the modification 3 has the interface 13 as the electronic key system of the modification 1 does.

The interface 18 of the electronic key system of the modification 3 is connected with a car navigation device 5 with GPS function mounted to the automobile A. The car navigation device 5 is adapted to be capable of communicate with an external device (Not shown. For example, a predetermined device placed in the VICS center in this embodiment.) by the well-known VICS system, for example.

The external device corresponds to a command device in the present invention and has a function of generating break command data, the data about the break command, which is a command to break at least part (for example, the part for transmitting the engine drive enabling signal) of the program X, and transmitting the data to the car navigation device 5.

The regular actions of the electronic key system have been described in the first embodiment. The owner of the automobile A can use the automobile A in the manner described in the first embodiment at ordinary times.

On the other hand, if the electronic key 2 is stolen and the thief who stole the electronic key 2 or the like uses the automobile A by decoding the encrypted program X stored in the program execution device 1 in an unauthorized manner, the owner of the automobile A informs the VICS center of that directly or through the dealer from which the owner bought the automobile A or the manufacturer of the automobile A.

When the VICS center receives the information, it causes the above-mentioned device corresponding to the command device of the present invention to generate the break command data and transmits the data to the car navigation device 5. The break command data is transmitted to the car navigation device 5 of the automobile A via the VICS system.

When the car navigation device 5 receives the data, it transmits the data to the interface 18 without regard of whether the data is intact or not. The break command data is transmitted from the interface 18 to the CPU 11.

When the CPU 11 receives the break command data, it makes an irreversible change to the part of the program X designated by the break command data. This is performed by deleting the part of the program X to which the irreversible change is to be made or overwriting the part by some data irrelevant to the program X. In the modification 3, for the purpose of making the change, the part of the program X to which the irreversible change is to be made is recorded in the RAM 13 instead of the ROM 12.

The program X with the irreversible change made thereon cannot be executed again unless an individual who is authorized to recover the program X takes appropriate measure.

In the modification 3, at least a portion of the part of the program X to which the irreversible change is to be made is unique to each program execution device 1. This is for preventing a malicious person who obtained the program X (the part to which the irreversible change is to be made, or the like) of another program execution device 1 by extracting the program X from that program execution device 1 from recovering the part of the program X to which the irreversible change is already made by using the program obtained from the program execution device 1 (by overwriting the part with the obtained program).

Incidentally, the modification 3 may be combined with the first embodiment, the other modifications of the first embodiment, the second embodiment or modifications of the second embodiment described below.

### <Non-claimed modification 4>

The program X may also be used as a program for opening an automatic door of a condominium or the like.

In the modification 4, an automatic door of a condominium that is a combination of the electronic key and a motor electric lock will be proposed.

The motor electric lock is attached to an automatic door and includes the program execution device of the present invention. The program execution device of the modification 4 has a motor control device instead of the engine control device of the above-mentioned embodiments. When the program execution device executes the decrypted program X, an open door enabling signal for enabling to open the automatic door is transmitted to the motor control device so that the program execution device can command the motor control device to open the automatic door. When the automatic door is closed as no one is there to go through the entrance, the program X recorded in the program execution device of the motor control device is left encrypted; therefore, the automatic door cannot be opened unless the program X is decoded with the decoding information in the electronic key. That is, by including the authentication process as part of a series cf processes for executing the program for opening the automatic door, the embodiment also can prevent a person from performing misdeeds on the authentication process to open and close the automatic door. Accordingly, it can make the use of the electronic key safer.

Incidentally, the modification 4 may be combined with the first embodiment, the other modifications of the first embodiment, the second embodiment or modifications of the second embodiment described below.

### <<Second Embodiment>>

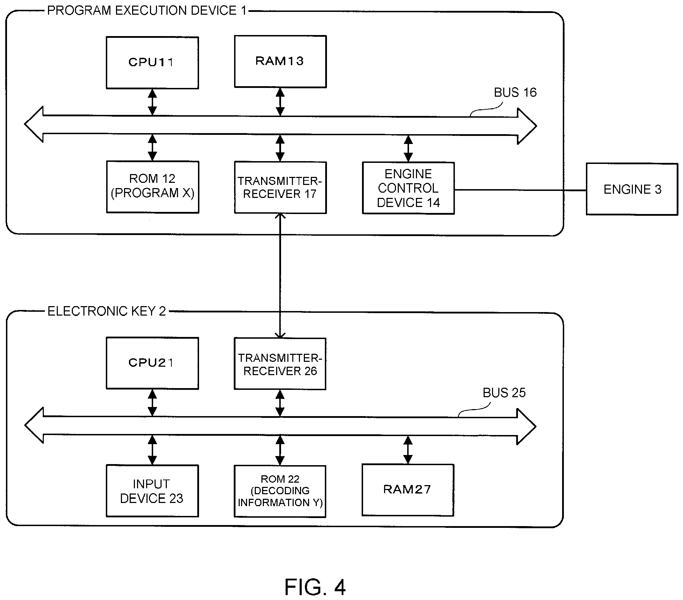

Although the above-mentioned electronic key system is for decoding the encrypted program X at the side of the program execution device 1, the program X may be decoded at the side of electronic key 2. The embodiment for that case will be shown in Fig. 4.

In this embodiment, the hardware configuration of the program execution device 1 has the transmitter-receiver 17, which is capable of transmitting and receiving data, instead of the receiver 15 that only receives the decoding information Y. The electronic key 2 has the transmitter-receiver 26, which is capable of transmitting and receiving data, instead of the transmitter 24 that only transmits the decoding information Y. A RAM 27 is added to the electronic key 2. That is, the CPU 21, the ROM 22, the input device 23, the transmitter-receiver 26 and the RAM 27 can exchange data via the bus 25.

Unlike the receiver 15 and the transmitter 24 in the first embodiment, the transmitter-receiver 17 and the transmitter-receiver 26 can interactively communicate with each other.

The ROM 22 records predetermined data. The data contains the decoding information Y that is needed for decoding the encrypted program X recorded in the program execution device 1. The ROM 22 may have the same configuration as that of the ROM 22 of the first embodiment.

The input device 23 is a push-button switch in this embodiment. In response to an operation on the input device 23, the information on the operation is transmitted to the CPU 21 via the bus 25.

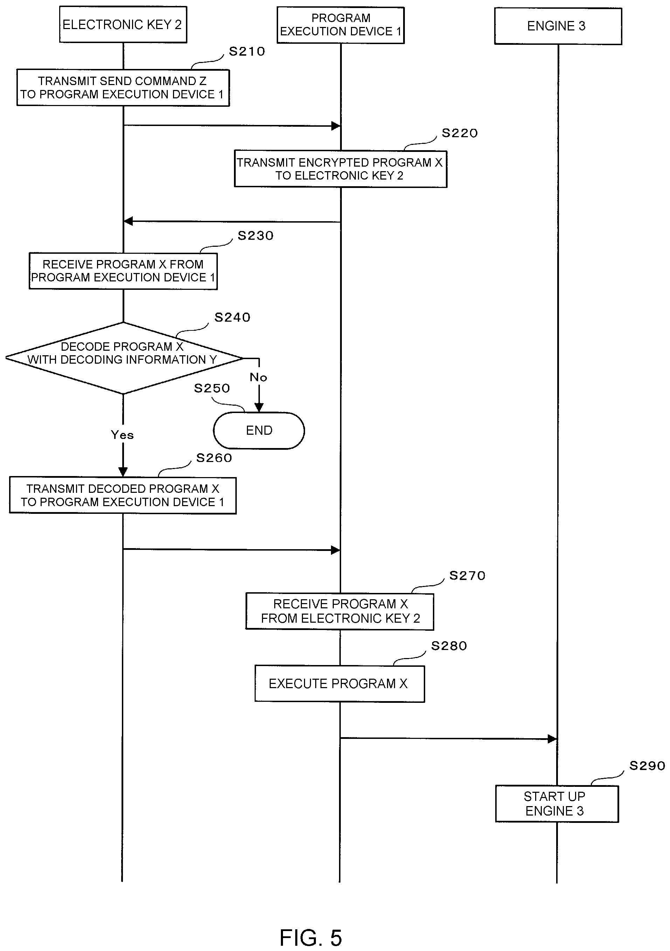

Next, a flow ot processes executed in the electronic key system will be described with reference to Fig. 5.

The flow of the processes executed in the electronic key system will be shown below.

First, when the switch on the input device 23 of the electronic key 2 is pushed, the electronic key 2 transmits a send command Z to transmit the encrypted program X that is recorded in the program execution device 1 to the electronic key 2 to the program execution device 1 (S210). Here, the send command Z reaches the transmitter-receiver 26 via the bus 25 by the CPU 21. The transmitter-receiver 26 transmits the command to the transmitter-receiver 17. The send command Z transmitted from the transmitter-receiver 26 is received by the transmitter-receiver 17. The received send command Z is transmitted to the CPU 11 via the bus 16.

When the CPU 11 receives the send command Z, it reads out the encrypted program X from the ROM 21 and transmits the program X to the transmitter-receiver 17 via the bus 16. The transmitter-receiver 17 transmits the program X to the transmitter-receiver 26 (S220). The program X transmitted from the transmitter-receiver 17 is received by the transmitter-receiver 26. The received program X is transmitted from the transmitter-receiver 26 to the RAM 27 via the bus 25 by the CPU 21 (S230).

Next, the CPU 21 reads out the encrypted program X from the RAM 27 and the decoding information Y from the ROM 22, respectively.

The CPU 21 decodes the encrypted program X based on the decoding information Y (S240). The CPU 21 decodes the program X with the key, the decoding information Y. In the embodiment, if the CPU 21 cannot decode the program X (S240:No), the electronic key 2 stops the process instead of executing any process (S250). In fact, if the CPU 21 cannot decode the program X and the decrypted program X is not returned to the program execution device 1 within a certain time period, the program execution device 1 may execute another process like alerting to tell that the decoding information Y is invalid.

When the program X is decoded (S240:Yes), the decoded program X is transmitted by the CPU 21 to the transmitter-receiver 26 via the bus 25. The transmitter-receiver 26 transmits the program X to the transmitter-receiver 17 (S260). The transmitter-receiver 17 receives the program X transmitted from the transmitter-receiver 26. The received program X is transmitted from the transmitter-receiver 17 to the RAM 13 via the bus 16 (S270).

The CPU 11 reads out the decoded program X from the RAM 13. Then, the CPU 11 executes the program X and transmits the engine drive enabling signal to the engine control device 14 (S280). When the engine control device 14 receives the engine drive enabling signal, it starts up the engine 3 (S290). Thereafter, the CPU 11 transmits various commands to control the engine to the engine control device 14 of the automobile A by executing the program X.

### <Modification 5>

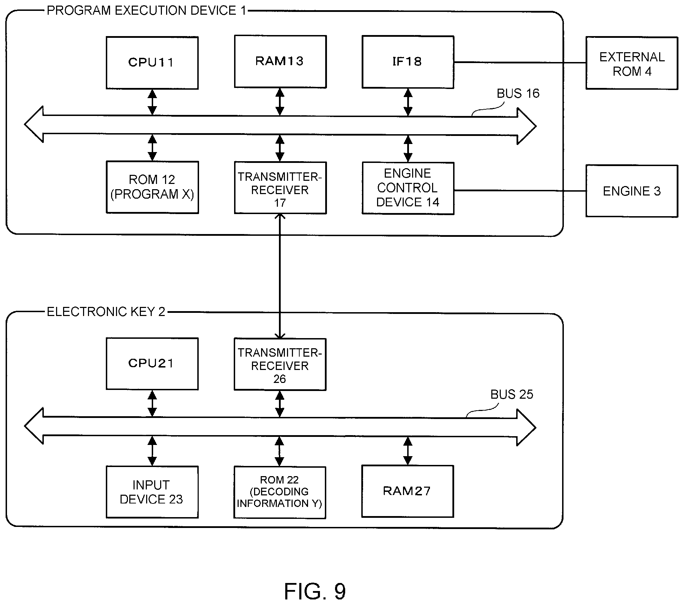

The electronic key system of a modification 5 is shown in Fig. 9.

As shown in Fig. 8, the electronic key system of the modification 5 has the same configuration as that of the electronic key system of the second embodiment.

The electronic key system of the modification 5 is different from the electronic key system of the second embodiment in that the program execution device 1 of the electronic key system of the modification 5 has the interface 18 as shown in Fig. 9. In that, the electronic key system of the modification 5 is the same as that of the modification 1.

The interface 18 of the modification 5 has the same configuration as that of the modification 1, and is connected with the bus 16 as that of the modification 1 does, and is also connected with the external ROM 4 that is the same as that of the modification 1 similar to the modification 1. The external ROM 4 records the component information that is necessary to decode the program X.

The flow of the processes executed in the electronic key system of the modification 5 is principally the same as that in the electronic key system of the second embodiment.

The flow of the processes executed in the electronic key system of the modification 5 is different from that in the electronic key system of the second embodiment in that the decoding information Y is needed to decode the program X in the second embodiment while not only the decoding information Y but also the component information is needed in the modification 5.

In the second embodiment, when the switch on the input device 23 of the electronic key 2 is pushed, the encrypted program X is transmitted from the program execution device 1 to the electronic key 2 based on the send command Z from the electronic key 2. In the modification 5, the CPU 11 of the program execution device 1 that received the send command Z not only transmits the program X to the electronic key 2 but also instructs the interface 18 to obtain the component information recorded in the external ROM 4. The interface 18 obtains the component information from the external ROM 4. That information is transmitted to the electronic key 2 via the transmitter-receiver 17 under the control of the CPU 11.

The component information transmitted to the electronic key 2 is recorded in the RAM 27 together with the program X.

Then, the CPU 21 reads out the encrypted program X and the component information from the RAM 27 and the decoding information Y from the ROM 22, and decodes the program X by using the decoding information Y and the component information. The program X is decoded in the same manner as in the modification 1.

The other processes are the same as those of the second embodiment.

### <Modification 6>

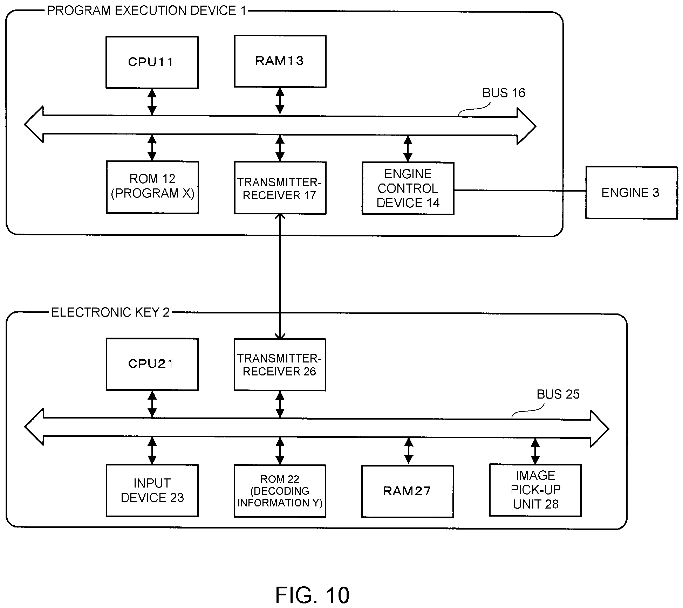

The electronic key system of a modification 6 is shown in Fig. 10.

As shown in Fig. 10, the electronic key system of the modification 6 has the same configuration as that of the electronic key system of the second embodiment.

The electronic key system of the modification 6 is different from the electronic key system of the second embodiment in that the electronic key 2 of the electronic key system of the modification 6 has an image pick-up unit 28 as shown in Fig. 10.

The image pick-up unit 28 has the same configuration as that of the image pick-up unit 19 of the modification 2. That is, the image pick-up unit 28 is a bar code reader. On the other hand, also In the modification 6, the component information, which is a bar code, is printed on at least one of the components of the automobile A as in tne modification 2. The image pick-up unit 28 can not only pick up an image of the bar code but also scan the component information, which is contained in the bar code, by image recognition. The component information is needed to decode the program X.

A flow of processes executed in the electronic key system of the modification 6 is principally the same as that executed in the electronic key system of the second embodiment.

The flow of processes executed in tne electronic key system of the modification 6 is different from that executed in the electronic key system of the second embodiment in that the decoding information Y is needed to decode the program X in the second embodiment while not only the decoding information Y but also the component information is needed in the modification 6 as in the modification 2.

In the second embodiment, when the switch on the input device 23 of the electronic key 2 is pushed, the encrypted program X is transmitted from the program execution device 1 to the electronic key 2 based on the send command Z from the electronic key 2. The program X transmitted to the electronic key 2 is recorded in the RAM 27. In the modification 6, the CPU 21 allows the image pick-up unit 28 to pick up an image of the bar code for, for example, a predetermined time period after the input device 23 of the electronic key 2 is operated. Within the time period, the user holds the electronic key 2 over the bar code printed on a predetermined component to make the image pick-up unit 28 pick up an image of the bar code. The image pick-up unit 28 generates data of the component information by performing image recognition on the bar code image that is obtained by the image pick-up. The data of the component information is recorded in the RAM 27 under the instruction of the CPU 21.

Then, the CPU 21 reads out the encrypted program X and the component information from the RAM 27 and the decoding information Y from the ROM 22, and decodes the program X by using the decoding information Y and the component information. The program X is decoded in the same manner as in the modification 1.

The other processes are the same as those of the second embodiment.

## Claims

1. An electronic key system comprising a combination of:
a vehicle (A) comprising a power unit and vehicle components;
a program execution device (1) comprising program execution device side recording means (12) storing a program (X) at least part of which is encrypted and program executing means (11) for executing said program (X) when said encrypted part of said program (X) is decoded; and
an electronic key (2) comprising electronic key side recording means (22) recording decoding information (Y) needed for decoding said encrypted part of said program (X), wherein
said electronic key (2) comprises transmitting means (24) for transmitting said decoding information (Y) to said program execution device (1), and
said program execution device (1) comprises receiving means (15) for receiving said decoding information (Y) from said transmitting means (24) and decoding means for decoding said encrypted part of said program (X) by using said decoding information (Y) that is received by said receiving means (15),
said program execution device (1) is configured to control a predetermined driving device for performing a physical action by having said program executing means (11) execute said program (X),
said program execution device (1) is mounted on the vehicle (A) and said driving device is the power unit of said vehicle (A),
component information needed for decoding said encrypted part of said program (X) is fixedly added to part of a component constituting said vehicle (A),
said decoding means has receiving means for receiving input of said component information or decoding said encrypted part of said program(X), and
said decoding means is configured to decode said encrypted part of said program (X) by using both said decoding information (Y) and said component information, wherein
said component information is either drawn on part of the component constituting said vehicle (A) as information that can be recognized by image recognition, or
data recorded in a recording medium that is provided on part of the component constituting said vehicle (A),
or a combination of both
and the electronic key system comprises either:
image pick-up means (19) for picking up an image of said component information when said decoding means decodes said encrypted part of said program (X);
image processing means for generating said component information by image recognition from the image picked up by said image pick-up means(19); and
input means for inputting data of said component information generated by said image processing means to said receiving means, or
reading out means for said decoding means to read out data of said component information from said recording medium in decoding said encrypted part of said program; and
input means for inputting data of said component information read out by said reading out means to said receiving means,
or a combination of both.

2. An electronic key system comprising a combination of:
a vehicle (A) comprising a power unit and vehicle components;
a program execution device (1) comprising program execution device side recording means (12) storing a program (X) at least part of which is encrypted and program executing means (11) for executing said program (X) when said encrypted part of said program (X) is decoded; and
an electronic key (2) comprising electronic key side recording means (22) recording decoding information (Y) needed for decoding said encrypted part of said program (X), wherein
said program execution device (1) and said electronic key (2) respectively comprise program execution device side communication means (17) and electronic key side communication means (26) for transmitting and receiving said part of said program (X) to and from each other,
said electronic key (2) comprises decoding means for decoding said part of said program (X) by using said decoding information recorded in said electronic key side recording means (22), and
said decoding means is configured to receive said encrypted part of said program (X) that is transmitted by said program execution device side communication means (17) to said electronic key side communication means (26) from said electronic key side communication means (26) and then
to decode said encrypted part of said program (X), and said program executing means (11) is configured to execute said program (X) when said part of said program that is decoded by said decoding means is transmitted from said electronic key side communication means (26) to said program execution device side communication means (17),
said program execution device (1) is configured to control a predetermined driving device for performing a physical action by having said program executing means (11) execute said program (X),
said program execution device (1) is mounted on the vehicle (A) and said driving device is the power unit of said vehicle (A),
component information needed for decoding said encrypted part of said program (X) is fixedly added to part of a component constituting said vehicle (A),
said decoding means has receiving means for receiving input of said component information or decoding said encrypted part of said program (X), and
said decoding means is configured to decode said encrypted part of said program (X) by using both said decoding information (Y) and said component information, wherein
said component information is either drawn on part of the component constituting said vehicle (A) as information that can be recognized by image recognition, or,
data recorded in a recording medium that is provided on part of the component constituting said vehicle (A),
or a combination of both
and the electronic key system comprises either:
image pick-up means (19) for picking up an image of said component information when said decoding means decodes said encrypted part of said program (X);
image processing means for generating said component information by image recognition from the image picked up by said image pick-up means (19); and
input means for inputting data of said component information generated by said image processing means to said receiving means, or
reading out means for said decoding means to read out data of said component information from said recording medium in decoding said encrypted part of said program; and
input means for inputting data of said component information read out by said reading out means to said receiving means,
or a combination of both.

3. The electronic key system according to claim 1 or 2, wherein
said program execution device (1) comprises:
recording means for recording said decoded part of said program in a state in which said program executing means (11) can execute said program (X) when said encrypted part of said program is decoded; and
deleting means for deleting said decoded part of said program recorded in said recording means when it is determined whether a predetermined condition is satisfied or not and determined that the predetermined condition is satisfied.

4. The electronic key system according to claim 1 or 2, wherein said program execution device (11) comprises:
recording means for recording said decoded part of said program in a state in which said program executing means (11) can execute said program (X) when said encrypted part of said program is decoded; and
deleting means for deleting said decoded part of said program recorded in said recording means when it is determined whether a predetermined condition is satisfied or not and determined that the predetermined condition is satisfied, wherein
said predetermined condition is that the predetermined driving device that performed a physical action has stopped due to said program executing means (11) executing said program (X).

5. The electronic key system according to claim 1 or 2, wherein
said program execution device (1) comprises:
break command receiving means for receiving break command data transmitted by radio communication from a predetermined command device, wherein said predetermined command device is for outputting the break command data and said break command data is data about a break command for breaking said program (X); and
breaking means for making an irreversible change at least on part of said program (X) when said break command receiving means receives said break command data.

6. The electronic key system according to claim 5, wherein said breaking means is configured to determine whether a predetermined condition is satisfied or not when said break command receiving means receives said break command data, and to make the irreversible change at least on part of said program (X) when the predetermined condition is satisfied.

7. An information processing method performed in an electronic key system comprising a combination of:
a program execution device (1) comprising program execution device side recording means (12) storing a program (X) at least part of which is encrypted and program executing means (11) for executing said program when said encrypted part of said program (X) is decoded; and
an electronic key (2) comprising electronic key side recording means (22) recording decoding information (Y) needed for decoding said encrypted part of said program, wherein said program execution device (1) performs:
a step of receiving said decoding information (Y) recorded in said electronic key side recording means (22) from said electronic key (2);
a step of decoding said encrypted part of said program by using said received decoding information (Y); and
a step of performing said program (X) when said encrypted part of said program (X) is decoded,
wherein
said program execution device (1) controls a predetermined driving device that performs a physical action by having said information processing means (11) execute said program (X),
said program execution device (1) is mounted on a vehicle (A) and said driving device is a power unit of said vehicle (A),
component information needed for decoding said encrypted part of said program (X) is fixedly added to part of a component constituting said vehicle (A), and wherein said program execution device (1) further performs:
a step of receiving input of said component information for decoding said encrypted part of said program (X), and a step of decoding said encrypted part of said program (X) by using both said decoding information (Y) and said component information, wherein
said component information is either drawn on part of the component constituting said vehicle (A) as information that can be recognized by image recognition, or,
data recorded in a recording medium that is provided on part of the component constituting said vehicle (A)
or a combination of both
and the electronic key system comprises either:
image pick-up means (19) for picking up an image of said component information when said encrypted part of said program (X) is to be decoded;
image processing means for generating said component information by image recognition from the image picked up by said image pick-up means (19); and
input means for inputting data of said component information generated by said image processing means to said program execution device (1), or reading out means for said decoding means to read out data of said component information from said recording medium or decoding said encrypted part of said program; and
input means for inputting data of said component information read out by said reading out means to said program execution device (1) or a combination of both.

8. An information processing method performed in an electronic key system comprising a combination of:
a program execution device (1) comprising program execution device side recording means (12) storing a program (X) at least part of which is encrypted and program execution device side information processing means (11) for performing predetermined information processing; and
an electronic key (2) comprising electronic key side recording means (22) recording decoding information (Y) needed for decoding said encrypted part of said program and electronic key side information processing means (21) for performing predetermined information processing, wherein said electronic key side information processing means (21) performs:
a step of receiving said encrypted part of said program stored in said program execution device side recording means (12) from said program execution device (1);
a step of decoding said received encrypted part of said program by using said decoding information (Y) recorded in said electronic key side recording means (22); and
a step of transmitting said decoded part of said program to said program execution device (1); and said program execution device side information processing means (11) performs
a step of performing said program (X) including said decoded part, wherein
said program execution device (1) controls a predetermined driving device that performs a physical action by having said information processing means (11) execute said program (X),
said program execution device (1) is mounted on a vehicle (A) and said driving device is a power unit of said vehicle (A),
component information needed for decoding said encrypted part of said program (X) is fixedly added to part of a component constituting said vehicle (A), and wherein said electronic key side information processing means (21) further performs:
the step of receiving input of said component information for decoding said encrypted part of said program (X), and the step of decoding said encrypted part of said program (X) by using both said decoding information (Y) and said component information, wherein
said component information is either drawn on part of the component constituting said vehicle (A) as information that can be recognized by image recognition, or,
data recorded in a recording medium that is provided on part of the component constituting said vehicle (A),
or a combination of both
and the electronic key system comprises either:
image pick-up means (19) for picking up an image of said component information when said encrypted part of said program (X) is to be decoded;
image processing means for generating said component information by image recognition from the image picked up by said image pick-up means (19); and
input means for inputting data of said component information generated by said image processing means to said electronic key side information processing means (21), or
reading out means for said decoding means to read out data of said component information from said recording medium in decoding said encrypted part of said program; and
input means for inputting data of said component information read out by said reading out means to said electronic key side information processing means (21), or a combination of both.

## Patentansprüche

1. Elektronisches Schlüsselsystem, das eine Kombination von Folgendem umfasst:
einem Fahrzeug (A), das eine Leistungseinheit und Fahrzeugkomponenten umfasst;
einer Programmausführungseinrichtung (1), die Aufzeichnungsmittel (12) an der Seite der Programmausführungseinrichtung, das ein Programm (X) speichert, von dem zumindest ein Teil verschlüsselt ist, und Programmausführungsmittel (11) zum Ausführen des Programms (X) umfasst, wenn der verschlüsselte Teil des Programms (X) decodiert wird; und
einem elektronischen Schlüssel (2), der Aufzeichnungsmittel (22) an der Seite des elektronischen Schlüssels umfasst, das Decodierungsinformationen (Y) aufzeichnet, die zum Decodieren des verschlüsselten Teils des Programms (X) benötigt werden, wobei
der elektronische Schlüssel (2) Übertragungsmittel (24) zum Übertragen der Decodierungsinformationen (Y) zu der Programmausführungseinrichtung (1) umfasst und
die Programmausführungseinrichtung (1) Empfangsmittel (15) zum Empfangen der Decodierungsinformationen (Y) vom Übertragungsmittel (24) und Decodierungsmittel zum Decodieren des verschlüsselten Teils des Programms (X) unter Verwendung der Decodierungsinformationen (Y), die durch das Empfangsmittel (15) empfangen werden, umfasst,
die Programmausführungseinrichtung (1) ausgelegt ist zum Steuern einer vorbestimmten Ansteuereinrichtung zum Durchführen einer physischen Handlung, indem das Programmausführungsmittel (11) das Programm (X) ausführt,
die Programmausführungseinrichtung (1) am Fahrzeug (A) befestigt ist und die Ansteuereinrichtung die Leistungseinheit des Fahrzeugs (A) ist, Komponenteninformationen, die zum Decodieren des verschlüsselten Teils des Programms (X) benötigt werden, fest zu einem Teil einer Komponente, die das Fahrzeug (A) bildet, hinzugefügt werden,
das Decodierungsmittel Empfangsmittel zum Empfangen einer Eingabe der Komponenteninformationen zum Decodieren des verschlüsselten Teils des Programms (X) aufweist und
das Decodierungsmittel ausgelegt ist zum Decodieren des verschlüsselten Teils des Programms (X) unter Verwendung von sowohl den Decodierungsinformationen (Y) als auch den Komponenteninformationen, wobei
die Komponenteninformationen bezogen werden entweder von einem Teil der Komponente, die das Fahrzeug (A) bildet, als Informationen, die durch eine Bilderkennung erkannt werden können, oder
von Daten, die in einem Aufzeichnungsmedium aufgezeichnet sind, das auf einem Teil der Komponente, die das Fahrzeug (A) bildet, bereitgestellt ist,
oder eine Kombination von beiden,
und das elektronische Schlüsselsystem entweder Folgendes umfasst:
Bildaufnahmemittel (19) zum Aufnehmen eines Bildes der Komponenteninformationen, wenn das Decodierungsmittel den verschlüsselten Teil des Programms (X) decodiert;
Bildverarbeitungsmittel zum Erzeugen der Komponenteninformationen durch eine Bilderkennung aus dem Bild, das durch das Bildaufnahmemittel (19) aufgenommen wird, und
Eingabemittel zum Eingeben von Daten der Komponenteninformationen, die durch das Bildverarbeitungsmittel erzeugt werden, in das Empfangsmittel, oder
Auslesemittel für das Decodierungsmittel zum Auslesen von Daten der Komponenteninformationen aus dem Aufzeichnungsmedium beim Decodieren des verschlüsselten Teils des Programms und
Eingabemittel zum Eingeben von Daten der Komponenteninformationen, die durch das Auslesemittel ausgelesen werden, in das Empfangsmittel,
oder eine Kombination von beiden.

2. Elektronisches Schlüsselsystem, das eine Kombination von Folgendem umfasst:
einem Fahrzeug (A), das eine Leistungseinheit und Fahrzeugkomponenten umfasst;
einer Programmausführungseinrichtung (1), die Aufzeichnungsmittel (12) an der Seite der Programmausführungseinrichtung, das ein Programm (X) speichert, von dem zumindest ein Teil verschlüsselt ist, und Programmausführungsmittel (11) zum Ausführen des Programms (X) umfasst, wenn der verschlüsselte Teil des Programms (X) decodiert wird; und
einem elektronischen Schlüssel (2), der Aufzeichnungsmittel (22) an der Seite des elektronischen Schlüssels umfasst, das Decodierungsinformationen (Y) aufzeichnet, die zum Decodieren des verschlüsselten Teils des Programms (X) benötigt werden, wobei
die Programmausführungseinrichtung (1) und der elektronische Schlüssel (2) Kommunikationsmittel (17) an der Seite der Programmausführungseinrichtung bzw. Kommunikationsmittel (26) an der Seite des elektronischen Schlüssels zum Übertragen und Empfangen des Teils des Programms (X) zueinander und voneinander umfassen,
der elektronische Schlüssel (2) Decodierungsmittel zum Decodieren des Teils des Programms (X) unter Verwendung der Decodierungsinformationen, die im Aufzeichnungsmittel (22) an der Seite des elektronischen Schlüssels aufgezeichnet werden, umfasst und
das Decodierungsmittel ausgelegt ist zum Empfangen des verschlüsselten Teils des Programms (X), das durch das Kommunikationsmittel (17) an der Seite der Programmausführungseinrichtung zum Kommunikationsmittel (26) an der Seite des elektronischen Schlüssels übertragen wird, vom Kommunikationsmittel (26) an der Seite des elektronischen Schlüssels und dann zum Decodieren des verschlüsselten Teils des Programms (X), und das Programmausführungsmittel (11) ausgelegt ist zum Ausführen des Programms (X), wenn der Teil des Programms, das durch das Decodierungsmittel decodiert wird, vom Kommunikationsmittel (26) an der Seite des elektronischen Schlüssels zum Kommunikationsmittel (17) an der Seite der Programmausführungseinrichtung übertragen wird,
die Programmausführungseinrichtung (1) ausgelegt ist zum Steuern einer vorbestimmten Ansteuereinrichtung zum Durchführen einer physischen Handlung, indem das Programmausführungsmittel (11) das Programm (X) ausführt,
die Programmausführungseinrichtung (1) am Fahrzeug (A) befestigt ist und die Ansteuereinrichtung die Leistungseinheit des Fahrzeugs (A) ist, Komponenteninformationen, die zum Decodieren des verschlüsselten Teils des Programms (X) benötigt werden, fest zu einem Teil einer Komponente, die das Fahrzeug (A) bildet, hinzugefügt werden,
das Decodierungsmittel Empfangsmittel zum Empfangen einer Eingabe der Komponenteninformationen zum Decodieren des verschlüsselten Teils des Programms (X) aufweist und
das Decodierungsmittel ausgelegt ist zum Decodieren des verschlüsselten Teils des Programms (X) unter Verwendung von sowohl den Decodierungsinformationen (Y) als auch den Komponenteninformationen, wobei
die Komponenteninformationen bezogen werden entweder von einem Teil der Komponente, die das Fahrzeug (A) bildet, als Informationen, die durch eine Bilderkennung erkannt werden können, oder
von Daten, die in einem Aufzeichnungsmedium aufgezeichnet werden, das auf einem Teil der Komponente, die das Fahrzeug (A) bildet, bereitgestellt ist,
oder eine Kombination von beiden,
und das elektronische Schlüsselsystem entweder Folgendes umfasst:
Bildaufnahmemittel (19) zum Aufnehmen eines Bildes der Komponenteninformationen, wenn das Decodierungsmittel den verschlüsselten Teil des Programms (X) decodiert;
Bildverarbeitungsmittel zum Erzeugen der Komponenteninformationen durch eine Bilderkennung aus dem Bild, das durch das Bildaufnahmemittel (19) aufgenommen wird; und
Eingabemittel zum Eingeben von Daten der Komponenteninformationen, die durch das Bildverarbeitungsmittel erzeugt werden, in das Empfangsmittel, oder
Auslesemittel für das Decodierungsmittel zum Auslesen von Daten der Komponenteninformationen vom Aufzeichnungsmedium beim Decodieren des verschlüsselten Teils des Programms; und
Eingabemittel zum Eingeben von Daten der Komponenteninformationen, die durch das Auslesemittel ausgelesen werden, in das Empfangsmittel,
oder eine Kombination von beiden.

3. Elektronisches Schlüsselsystem nach Anspruch 1 oder 2, wobei
die Programmausführungseinrichtung (1) Folgendes umfasst:
Aufzeichnungsmittel zum Aufzeichnen des decodierten Teils des Programms in einem Zustand, in dem das Programmausführungsmittel (11) das Programm (X) ausführen kann, wenn der verschlüsselte Teil des Programms decodiert wird; und
Löschmittel zum Löschen des decodierten Teils des Programms, das im Aufzeichnungsmittel aufgezeichnet wird, wenn bestimmt wird, ob eine vorbestimmte Bedingung erfüllt ist oder nicht, und bestimmt wird, dass die vorbestimmte Bedingung erfüllt ist.

4. Elektronisches Schlüsselsystem nach Anspruch 1 oder 2, wobei
die Programmausführungseinrichtung (11) Folgendes umfasst:
Aufzeichnungsmittel zum Aufzeichnen des decodierten Teils des Programms in einem Zustand, in dem das Programmausführungsmittel (11) das Programm (X) ausführen kann, wenn der verschlüsselte Teil des Programms decodiert wird; und
Löschmittel zum Löschen des decodierten Teils des Programms, das im Aufzeichnungsmittel aufgezeichnet wird, wenn bestimmt wird, ob eine vorbestimmte Bedingung erfüllt ist oder nicht, und bestimmt wird, dass die vorbestimmte Bedingung erfüllt ist, wobei
die vorbestimmte Bedingung lautet, dass die vorbestimmte Ansteuereinrichtung, die eine physische Handlung durchführte, aufgrund dessen gestoppt hat, dass das Programmausführungsmittel (11) das Programm (X) ausführt.

5. Elektronisches Schlüsselsystem nach Anspruch 1 oder 2, wobei
die Programmausführungseinrichtung (1) folgendes umfasst:
Unterbrechungsbefehl-Empfangsmittel zum Empfangen von Unterbrechungsbefehlsdaten, die durch eine Funkkommunikation von einer vorbestimmten Befehlseinrichtung übertragen werden, wobei die vorbestimmte Befehlseinrichtung zum Ausgeben der Unterbrechungsbefehlsdaten besteht und die Unterbrechungsbefehlsdaten Daten über einen Unterbrechungsbefehl zum Unterbrechen des Programms (X) sind; und
Unterbrechungsmittel zum Ausführen einer irreversiblen Änderung von zumindest einem Teil des Programms (X), wenn das Unterbrechungsbefehl-Empfangsmittel die Unterbrechungsbefehlsdaten empfängt.

6. Elektronisches Schlüsselsystem nach Anspruch 5, wobei
das Unterbrechungsmittel ausgelegt ist zum Bestimmen, ob eine vorbestimmte Bedingung erfüllt ist oder nicht, wenn das Unterbrechungsbefehl-Empfangsmittel die Unterbrechungsbefehlsdaten empfängt, und zum Ausführen der irreversiblen Änderung von zumindest einem Teil des Programms (X), wenn die vorbestimmte Bedingung erfüllt ist.

7. Informationsverarbeitungsverfahren, das in einem elektronischen Schlüsselsystem durchgeführt wird, das eine Kombination von Folgendem umfasst:
einer Programmausführungseinrichtung (1), die Aufzeichnungsmittel (12) an der Seite der Programmausführungseinrichtung, das ein Programm (X) speichert, von dem zumindest ein Teil verschlüsselt ist, und Programmausführungsmittel (11) zum Ausführen des Programms umfasst, wenn der verschlüsselte Teil des Programms (X) decodiert wird; und
einem elektronischen Schlüssel (2), der Aufzeichnungsmittel (22) an der Seite des elektronischen Schlüssels umfasst, das Decodierungsinformationen (Y) aufzeichnet, die zum Decodieren des verschlüsselten Teils des Programms benötigt werden, wobei die Programmausführungseinrichtung (1) folgendes durchführt:
einen Schritt des Empfangens der Decodierungsinformationen (Y), die im Aufzeichnungsmittel (22) an der Seite des elektronischen Schlüssels aufgezeichnet werden, vom elektronischen Schlüssel (2);
einen Schritt des Decodierens des verschlüsselten Teils des Programms unter Verwendung der empfangenen Decodierungsinformationen (Y) und
einen Schritt des Durchführens des Programms (X), wenn der verschlüsselte Teil des Programms (X) decodiert wird,
wobei
die Programmausführungseinrichtung (1) eine vorbestimmte Ansteuereinrichtung steuert, die eine physische Handlung durchführt, indem das Informationsverarbeitungsmittel (11) das Programm (X) ausführt,
die Programmausführungseinrichtung (1) an einem Fahrzeug (A) befestigt ist und die Ansteuereinrichtung eine Leistungseinheit des Fahrzeugs (A) ist,
Komponenteninformationen, die zum Decodieren des verschlüsselten Teils des Programms (X) benötigt werden, fest zu einem Teil einer Komponente, die das Fahrzeug (A) bildet, hinzugefügt werden,
und wobei die Programmausführungseinrichtung (1) ferner folgendes durchführt:
einen Schritt des Empfangens einer Eingabe der Komponenteninformationen zum Decodieren des verschlüsselten Teils des Programms (X) und
einen Schritt des Decodierens des verschlüsselten Teils des Programms (X) unter Verwendung von sowohl den Decodierungsinformationen (Y) als auch den Komponenteninformationen, wobei
die Komponenteninformationen bezogen werden entweder von einem Teil der Komponente, die das Fahrzeug (A) bildet, als Informationen, die durch eine Bilderkennung erkannt werden können, oder
von Daten, die in einem Aufzeichnungsmedium aufgezeichnet werden, das auf einem Teil der Komponente, die das Fahrzeug (A) bildet, bereitgestellt ist,
oder eine Kombination von beiden,
und das elektronische Schlüsselsystem entweder folgendes umfasst:
Bildaufnahmemittel (19) zum Aufnehmen eines Bildes der Komponenteninformationen, wenn der verschlüsselte Teil des Programms (X) decodiert werden soll;
Bildverarbeitungsmittel zum Erzeugen der Komponenteninformationen durch eine Bilderkennung aus dem Bild, das durch das Bildaufnahmemittel (19) aufgenommen wird; und
Eingabemittel zum Eingeben von Daten der Komponenteninformationen, die durch das Bildverarbeitungsmittel erzeugt werden, in die Programmausführungseinrichtung (1), oder
Auslesemittel für das Decodierungsmittel zum Auslesen von Daten der Komponenteninformationen aus dem Aufzeichnungsmittel zum Decodieren des verschlüsselten Teils des Programms und
Eingabemittel zum Eingeben von Daten der Komponenteninformationen, die durch das Auslesemittel ausgelesen werden, in die Programmausführungseinrichtung (1),
oder eine Kombination von beiden.

8. Informationsverarbeitungsverfahren, das in einem elektronischen Schlüsselsystem durchgeführt wird, das eine Kombination von folgendem umfasst:
einer Programmausführungseinrichtung (1), die Aufzeichnungsmittel (12) an der Seite der Programmausführungseinrichtung, das ein Programm (X) speichert, von dem zumindest ein Teil verschlüsselt ist, und Informationsverarbeitungsmittel (11) an der Seite der Programmausführungseinrichtung zum Durchführen einer vorbestimmten Informationsverarbeitung umfasst; und
einem elektronischen Schlüssel (2), der Aufzeichnungsmittel (22) an der Seite des elektronischen Schlüssels, das Decodierungsinformationen (Y) aufzeichnet, die zum Decodieren des verschlüsselten Teils des Programms benötigt werden, und Informationsverarbeitungsmittel (21) an der Seite des elektronischen Schlüssels zum Durchführen einer vorbestimmten Informationsverarbeitung umfasst, wobei das Informationsverarbeitungsmittel (21) an der Seite des elektronischen Schlüssels folgendes durchführt:
einen Schritt des Empfangens des verschlüsselten Teils des Programms, das im Aufzeichnungsmittel (12) an der Seite der Programmausführungseinrichtung gespeichert ist, von der Programmausführungseinrichtung (1);
einen Schritt des Decodierens des empfangenen verschlüsselten Teils des Programms unter Verwendung der Decodierungsinformationen (Y), die im Aufzeichnungsmittel (22) an der Seite des elektronischen Schlüssels aufgezeichnet werden; und
einen Schritt des Übertragens des decodierten Teils des Programms zu der Programmausführungseinrichtung (1); und das Informationsverarbeitungsmittel (11) an der Seite der Programmausführungseinrichtung folgendes durchführt:
einen Schritt des Durchführens des Programms (X) einschließlich des decodierten Teils, wobei die Programmausführungseinrichtung (1) eine vorbestimmte Ansteuereinrichtung steuert, die eine physische Handlung durchführt, bei der das Informationsverarbeitungsmittel (11) das Programm (X) ausführt,
die Programmausführungseinrichtung (1) an einem Fahrzeug (A) befestigt ist und die Ansteuereinrichtung eine Leistungseinheit des Fahrzeugs (A) ist,
Komponenteninformationen, die zum Decodieren des verschlüsselten Teils des Programms (X) benötigt werden, fest zu einem Teil einer Komponente, die das Fahrzeug (A) bildet, hinzugefügt werden,
und wobei das Informationsverarbeitungsmittel (21) an der Seite des elektronischen Schlüssels ferner folgendes durchführt:
den Schritt des Empfangens einer Eingabe der Komponenteninformationen zum Decodieren des verschlüsselten Teils des Programms (X) und
den Schritt des Decodierens des verschlüsselten Teils des Programms (X) unter Verwendung von sowohl den Decodierungsinformationen (Y) als auch den Komponenteninformationen, wobei
die Komponenteninformationen bezogen werden entweder von einem Teil der Komponente, die das Fahrzeug (A) bildet, als Informationen, die durch eine Bilderkennung erkannt werden können, oder
von Daten, die in einem Aufzeichnungsmedium aufgezeichnet werden, das auf einem Teil der Komponente, die das Fahrzeug (A) bildet, bereitgestellt ist,
oder eine Kombination von beiden,
und das elektronische Schlüsselsystem entweder folgendes umfasst:
ein Bildaufnahmemittel (19) zum Aufnehmen eines Bildes der Komponenteninformationen, wenn der verschlüsselte Teil des Programms (X) decodiert werden soll;
Bildverarbeitungsmittel zum Erzeugen der Komponenteninformationen durch eine Bilderkennung aus dem Bild, das durch das Bildaufnahmemittel (19) aufgenommen wird; und
Eingabemittel zum Eingeben von Daten der Komponenteninformationen, die durch das Bildverarbeitungsmittel erzeugt werden, in das Informationsverarbeitungsmittel (21) an der Seite des elektronischen Schlüssels, oder
Auslesemittel für das Decodierungsmittel zum Auslesen von Daten der Komponenteninformationen aus dem Aufzeichnungsmittel beim Decodieren des verschlüsselten Teils des Programms und
Eingabemittel zum Eingeben von Daten der Komponenteninformationen, die durch das Auslesemittel ausgelesen werden, in das Informationsverarbeitungsmittel (21) an der Seite des elektronischen Schlüssels,
oder eine Kombination von beiden.

## Revendications

1. Système de clé électronique comprenant une combinaison de :
un véhicule (A) comprenant une unité de puissance et des composants de véhicule ;
un dispositif d'exécution de programme (1) comprenant un moyen d'enregistrement côté dispositif d'exécution de programme (12) mémorisant un programme (X) dont au moins une partie est cryptée et un moyen d'exécution de programme (11) destiné à exécuter ledit programme (X) lorsque ladite partie cryptée dudit programme (X) est décodée ; et
une clé électronique (2) comprenant un moyen d'enregistrement côté clé électronique (22) enregistrant des informations de décodage (Y) nécessaires au décodage de ladite partie cryptée dudit programme (X), où
ladite clé électronique (2) comprend un moyen de transmission (24) destiné à transmettre lesdites informations de décodage (Y) audit dispositif d'exécution de programme (1), et
ledit dispositif d'exécution de programme (1) comprend un moyen de réception (15) destiné à recevoir lesdites informations de décodage (Y) provenant dudit moyen de transmission (24) et un moyen de décodage destiné à décoder ladite partie cryptée dudit programme (X) à l'aide desdites informations de décodage (Y) qui sont reçues par ledit moyen de réception (15),
ledit dispositif d'exécution de programme (1) est configuré pour commander un dispositif d'entraînement prédéterminé destiné à effectuer une action physique lorsque ledit moyen d'exécution de programme (11) exécute ledit programme (X),
ledit dispositif d'exécution de programme (1) est monté sur le véhicule (A) et ledit dispositif d'entraînement est l'unité de puissance dudit véhicule (A),
des informations de composant nécessaires au décodage de ladite partie cryptée dudit programme (X) sont ajoutées de manière fixe à une partie d'un composant constitutif dudit véhicule (A),
ledit moyen de décodage présente un moyen de réception destiné à recevoir une entrée desdites informations de composant afin de décoder ladite partie cryptée dudit programme (X), et
ledit moyen de décodage est configuré pour décoder ladite partie cryptée dudit programme (X) à l'aide desdites informations de décodage (Y) et desdites informations de composant, où
lesdites informations de composant sont soit issues d'une partie du composant constitutif dudit véhicule (A) en tant qu'informations qui peuvent être reconnues par reconnaissance d'image, soit
des données enregistrées sur un support d'enregistrement qui est prévu sur une partie du composant constitutif dudit véhicule (A),
ou une combinaison des deux
et le système de clé électronique comprend soit :
un moyen d'acquisition d'image (19) destiné à acquérir une image desdites informations de composant lorsque ledit moyen de décodage décode ladite partie cryptée dudit programme (X) ;
un moyen de traitement d'image destiné à générer lesdites informations de composant par reconnaissance d'image sur l'image acquise par ledit moyen d'acquisition d'image (19) ; et
un moyen d'entrée destiné à entrer des données desdites informations de composant générées par ledit moyen de traitement d'image dans ledit moyen de réception, soit
un moyen de lecture destiné audit moyen de décodage afin de lire des données desdites informations de composant provenant dudit support d'enregistrement lors du décodage de ladite partie cryptée dudit programme ; et
un moyen d'entrée destiné à entrer des données desdites informations de composant lues par ledit moyen de lecture dans ledit moyen de réception,
ou une combinaison des deux.

2. Système de clé électronique comprenant une combinaison de :
un véhicule (A) comprenant une unité de puissance et des composants de véhicule ;
un dispositif d'exécution de programme (1) comprenant un moyen d'enregistrement côté dispositif d'exécution de programme (12) mémorisant un programme (X) dont au moins une partie est cryptée et un moyen d'exécution de programme (11) destiné à exécuter ledit programme (X) lorsque ladite partie cryptée dudit programme (X) est décodée ; et
une clé électronique (2) comprenant un moyen d'enregistrement côté clé électronique (22) enregistrant des informations de décodage (Y) nécessaires au décodage de ladite partie cryptée dudit programme (X), où
ledit dispositif d'exécution de programme (1) et ladite clé électronique (2) comprennent respectivement un moyen de communication côté dispositif d'exécution de programme (17) et un moyen de communication côté clé électronique (26) tous deux destinés à transmettre à l'autre et à recevoir de l'autre ladite partie dudit programme (X),
ladite clé électronique (2) comprend un moyen de décodage destiné à décoder ladite partie dudit programme (X) à l'aide desdites informations de décodage enregistrées dans ledit moyen d'enregistrement côté clé électronique (22), et
ledit moyen de décodage est configuré pour recevoir ladite partie cryptée dudit programme (X) qui est transmise par ledit moyen de communication côté dispositif d'exécution de programme (17) audit moyen de communication côté clé électronique (26), dudit moyen de communication côté clé électronique (26) puis décoder ladite partie cryptée dudit programme (X), et ledit moyen d'exécution de programme (11) est configuré pour exécuter ledit programme (X) lorsque ladite partie dudit programme qui est décodée par ledit moyen de décodage est transmise par ledit moyen de communication côté clé électronique (26) audit moyen de communication côté dispositif d'exécution de programme (17),
ledit dispositif d'exécution de programme (1) est configuré pour commander un dispositif d'entraînement prédéterminé destiné à effectuer une action physique lorsque ledit moyen d'exécution de programme (11) exécute ledit programme (X),
ledit dispositif d'exécution de programme (1) est monté sur le véhicule (A) et ledit dispositif d'entraînement est l'unité de puissance dudit véhicule (A),
des informations de composant nécessaires au décodage de ladite partie cryptée dudit programme (X) sont ajoutées de manière fixe à une partie d'un composant constitutif dudit véhicule (A),
ledit moyen de décodage présente un moyen de réception destiné à recevoir une entrée desdites informations de composant afin de décoder ladite partie cryptée dudit programme (X), et
ledit moyen de décodage est configuré pour décoder ladite partie cryptée dudit programme (X) à l'aide desdites informations de décodage (Y) et desdites informations de composant, où
lesdites informations de composant sont soit issues d'une partie du composant constitutif dudit véhicule (A) en tant qu'informations qui peuvent être reconnues par reconnaissance d'image, soit
des données enregistrées sur un support d'enregistrement qui est prévu sur une partie du composant constitutif dudit véhicule (A),
ou une combinaison des deux
et le système de clé électronique comprend soit :
un moyen d'acquisition d'image (19) destiné à acquérir une image desdites informations de composant lorsque ledit moyen de décodage décode ladite partie cryptée dudit programme (X) ;
un moyen de traitement d'image destiné à générer lesdites informations de composant par reconnaissance d'image sur l'image acquise par ledit moyen d'acquisition d'image (19) ; et
un moyen d'entrée destiné à entrer des données desdites informations de composant générées par ledit moyen de traitement d'image dans ledit moyen de réception, soit
un moyen de lecture destiné audit moyen de décodage afin de lire des données desdites informations de composant provenant dudit support d'enregistrement lors du décodage de ladite partie cryptée dudit programme ; et
un moyen d'entrée destiné à entrer des données desdites informations de composant lues par ledit moyen de lecture dans ledit moyen de réception,
ou une combinaison des deux.

3. Système de clé électronique selon la revendication 1 ou 2, dans lequel
ledit dispositif d'exécution de programme (1) comprend :
un moyen d'enregistrement destiné à enregistrer ladite partie décodée dudit programme dans un état dans lequel ledit moyen d'exécution de programme (11) peut exécuter ledit programme (X) lorsque ladite partie cryptée dudit programme est décodée ; et
un moyen d'effacement destiné à effacer ladite partie décodée dudit programme enregistrée dans ledit moyen d'enregistrement lorsqu'il est déterminé si une condition prédéterminée est satisfaite ou non et que la condition prédéterminée est satisfaite.

4. Système de clé électronique selon la revendication 1 ou 2, dans lequel
ledit dispositif d'exécution de programme (1) comprend :
un moyen d'enregistrement destiné à enregistrer ladite partie décodée dudit programme dans un état dans lequel ledit moyen d'exécution de programme (11) peut exécuter ledit programme (X) lorsque ladite partie cryptée dudit programme est décodée ; et
un moyen d'effacement destiné à effacer ladite partie décodée dudit programme enregistrée dans ledit moyen d'enregistrement lorsqu'il est déterminé si une condition prédéterminée est satisfaite ou non et que la condition prédéterminée est satisfaite, où
ladite condition prédéterminée est que le dispositif d'entraînement prédéterminé qui a effectué une action physique s'est arrêté suite à l'exécution dudit programme (X) par ledit moyen d'exécution de programme (11).

5. Système de clé électronique selon la revendication 1 ou 2, dans lequel
ledit dispositif d'exécution de programme (1) comprend :
un moyen de réception d'instruction d'interruption destiné à recevoir des données d'instruction d'interruption transmises par communication radio depuis un dispositif d'instruction prédéterminé, où ledit dispositif d'instruction prédéterminé est destiné à délivrer les données d'instruction d'interruption et lesdites données d'instruction d'interruption sont des données concernant une instruction d'interruption pour interrompre ledit programme (X) ; et
un moyen d'interruption destiné à apporter une modification irréversible au moins sur une partie dudit programme (X) lorsque ledit moyen de réception d'instruction d'interruption reçoit lesdites données d'instruction d'interruption.

6. Système de clé électronique selon la revendication 5, dans lequel
ledit moyen d'interruption est configuré pour déterminer si une condition prédéterminée est satisfaite ou non lorsque ledit moyen de réception d'instruction d'interruption reçoit lesdites données d'instruction d'interruption, et pour apporter une modification irréversible au moins sur une partie dudit programme (X) lorsque la condition prédéterminée est satisfaite.

7. Procédé de traitement d'information réalisé dans un système de clé électronique comprenant une combinaison de :
un dispositif d'exécution de programme (1) comprenant un moyen d'enregistrement côté dispositif d'exécution de programme (12) mémorisant un programme (X) dont au moins une partie est cryptée et un moyen d'exécution de programme (11) destiné à exécuter ledit programme (X) lorsque ladite partie cryptée dudit programme (X) est décodée ;
et
une clé électronique (2) comprenant un moyen d'enregistrement côté clé électronique (22) enregistrant des informations de décodage (Y) nécessaires au décodage de ladite partie cryptée dudit programme,
où ledit dispositif d'exécution de programme (1) effectue :
une étape de réception desdites informations de décodage (Y) enregistrées dans ledit moyen d'enregistrement côté clé électronique (22) provenant de ladite clé électronique (2) ;
une étape de décodage de ladite partie cryptée dudit programme à l'aide desdites informations de décodage reçues (Y) ; et
une étape d'exécution dudit programme (X) lorsque ladite partie cryptée dudit programme (X) est décodée,
où
ledit dispositif d'exécution de programme (1) commande un dispositif d'entraînement prédéterminé qui effectue une action physique lorsque ledit moyen de traitement d'information (11) exécute ledit programme (X),
ledit dispositif d'exécution de programme (1) est monté sur un véhicule (A) et ledit dispositif d'entraînement est une unité de puissance dudit véhicule (A),
des informations de composant nécessaires au décodage de ladite partie cryptée dudit programme (X) sont ajoutées de manière fixe à une partie d'un composant constitutif dudit véhicule (A),
et où ledit dispositif d'exécution de programme (1) effectue en outre :
une étape de réception d'une entrée desdites informations de composant afin de décoder ladite partie cryptée dudit programme (X), et
une étape de décodage de ladite partie cryptée dudit programme (X) à l'aide desdites informations de décodage (Y) et desdites informations de composant, où
lesdites informations de composant sont soit issues d'une partie du composant constitutif dudit véhicule (A) en tant qu'informations qui peuvent être reconnues par reconnaissance d'image, soit
des données enregistrées sur un support d'enregistrement qui est prévu sur une partie du composant constitutif dudit véhicule (A),
ou une combinaison des deux
et le système de clé électronique comprend soit :
un moyen d'acquisition d'image (19) destiné à acquérir une image desdites informations de composant lorsque ladite partie cryptée dudit programme (X) doit être décodée ;
un moyen de traitement d'image destiné à générer lesdites informations de composant par reconnaissance d'image sur l'image acquise par ledit moyen d'acquisition d'image (19) ; et
un moyen d'entrée destiné à entrer des données desdites informations de composant générées par ledit moyen de traitement d'image dans ledit dispositif d'exécution de programme (1), soit
un moyen de lecture destiné audit moyen de décodage afin de lire des données desdites informations de composant provenant dudit support d'enregistrement lors du décodage de ladite partie cryptée dudit programme ; et
un moyen d'entrée destiné à entrer des données desdites informations de composant lues par ledit moyen de lecture dans ledit dispositif d'exécution de programme (1),
ou une combinaison des deux.

8. Procédé de traitement d'information réalisé dans un système de clé électronique comprenant une combinaison de :
un dispositif d'exécution de programme (1) comprenant un moyen d'enregistrement côté dispositif d'exécution de programme (12) mémorisant un programme (X) dont au moins une partie est cryptée et un moyen de traitement d'information côté dispositif d'exécution de programme (11) destiné à réaliser un traitement d'information prédéterminé ; et
une clé électronique (2) comprenant un moyen d'enregistrement côté clé électronique (22) enregistrant des informations de décodage (Y) nécessaires au décodage de ladite partie cryptée dudit programme et un moyen de traitement d'information côté clé électronique (21) destiné à réaliser un traitement d'information prédéterminé, où ledit moyen de traitement d'information côté clé électronique (21) effectue :
une étape de réception de ladite partie cryptée dudit programme mémorisé dans ledit moyen d'enregistrement côté dispositif d'exécution de programme (12) provenant dudit dispositif d'exécution de programme (1) ;
une étape de décodage de ladite partie cryptée reçue dudit programme à l'aide desdites informations de décodage (Y) enregistrées dans ledit moyen d'enregistrement côté clé électronique (22) ; et
une étape de transmission de ladite partie décodée dudit programme audit dispositif d'exécution de programme (1) ; et ledit moyen de traitement d'information côté dispositif d'exécution de programme (11) effectue
une étape d'exécution dudit programme (X) incluant ladite partie décodée,
où
ledit dispositif d'exécution de programme (1) commande un dispositif d'entraînement prédéterminé qui effectue une action physique lorsque ledit moyen de traitement d'information (11) exécute ledit programme (X),
ledit dispositif d'exécution de programme (1) est monté sur un véhicule (A) et ledit dispositif d'entraînement est une unité de puissance dudit véhicule (A),
des informations de composant nécessaires au décodage de ladite partie cryptée dudit programme (X) sont ajoutées de manière fixe à une partie d'un composant constitutif dudit véhicule (A),
et où ledit moyen de traitement d'information côté clé électronique (21) effectue en outre :
l'étape de réception d'une entrée desdites informations de composant afin de décoder ladite partie cryptée dudit programme (X), et
l'étape de décodage de ladite partie cryptée dudit programme (X) à l'aide desdites informations de décodage (Y) et desdites informations de composant, où
lesdites informations de composant sont soit issues d'une partie du composant constitutif dudit véhicule (A) en tant qu'informations qui peuvent être reconnues par reconnaissance d'image, soit
des données enregistrées sur un support d'enregistrement qui est prévu sur une partie du composant constitutif dudit véhicule (A),
ou une combinaison des deux
et le système de clé électronique comprend soit :
un moyen d'acquisition d'image (19) destiné à acquérir une image desdites informations de composant lorsque ladite partie cryptée dudit programme (X) doit être décodée ;
un moyen de traitement d'image destiné à générer lesdites informations de composant par reconnaissance d'image sur l'image acquise par ledit moyen d'acquisition d'image (19) ; et
un moyen d'entrée destiné à entrer des données desdites informations de composant générées par ledit moyen de traitement d'image dans ledit moyen de traitement d'information côté clé électronique (21), soit
un moyen de lecture destiné audit moyen de décodage afin de lire des données desdites informations de composant provenant dudit support d'enregistrement lors du décodage de ladite partie cryptée dudit programme ; et
un moyen d'entrée destiné à entrer des données desdites informations de composant lues par ledit moyen de lecture dans ledit moyen de traitement d'information côté clé électronique (21),
ou une combinaison des deux.
